# EUROPÄISCHE PATENTSCHRIFT

(11) **EP 2 747 235 B1**
(45) Veröffentlichungstag und Bekanntmachung des Hinweises auf die Patenterteilung: **09.11.2016**
(21) Anmeldenummer: 13005533.8
(22) Anmeldetag: 28.11.2013
(51) Int. Cl.: H02J 7/00, H02J 1/10

(54) **Elektrogerät in Gestalt einer Hand-Werkzeugmaschine oder eines Sauggeräts**
Electric device in the form of a manually operated machine tool or a suction device
Appareil électrique sous la forme d'une machine-outil manuelle ou d'un appareil d'aspiration

(30) Priorität: 24.12.2012 DE 102012025393
(43) Veröffentlichungstag der Anmeldung: 25.06.2014
(73) Patentinhaber: Festool GmbH, 73240 Wendlingen am Neckar (DE)
(72) Erfinder: Thüringer, Michael, 72663 Großbettlingen (DE); Fürst, Alexander, 73072 Donzdorf (DE)
(74) Vertreter: Patentanwälte Bregenzer und Reule Partnerschaftsgesellschaft mbB

(56) Entgegenhaltungen:
- WO-A1-2011/129171
- DE-A1-102008 040 061
- US-A- 4 622 508
- US-A- 5 712 553
- US-A1- 2012 299 548

## Beschreibung

Die Erfindung betrifft Elektrogerät in Gestalt einer Hand-Werkzeugmaschine oder eines Sauggeräts, gemäß Oberbegriff des Anspruchs 1.

Eine derartige Handwerkzeugmaschine ist beispielsweise in WO 2011/129171 A1 erläutert.

Ein weiteres Elektrogerät in Gestalt eines Elektro-HandWerkzeugs geht beispielsweise aus DE 38 44 093 C2 hervor. Die aus dieser Druckschrift bekannte Schaltung ermöglicht es, das Elektro-Hand-Werkzeug mit zwei Energiespeichern in Gestalt von Akkumulatoren in Serie zu betreiben, so dass eine höhere Versorgungsspannung für den Antriebsmotor bereit steht. Die Versorgungsströme können entsprechend niedriger sein. Es ergibt sich allerdings das Problem, dass stets beide Steckplätze für die Energiespeicher belegt sein müssen, damit die Maschine funktioniert.

Es ist daher die Aufgabe der vorliegenden Erfindung, eine universellere Nutzbarkeit eines Elektrogeräts in Gestalt eines Sauggeräts oder einer Hand-Werkzeugmaschine zu ermöglichen.

Zur Lösung der Aufgabe ist ein Elektrogerät gemäß der technischen Lehre des Anspruchs 1 vorgesehen.

Die Schaltung zur Deaktivierung der mindestens einen Anschlusskontaktanordnung weist mindestens einen Trennschalter zum Trennen einer elektrischen Verbindung zwischen der ersten Einspeiseleitung und dem ersten Anschlusskontakt und/oder zwischen der zweiten Einspeiseleitung und dem zweiten Anschlusskontakt auf.

Zur Lösung der Aufgabe ist ferner ein Energiespeicher zur Verwendung mit einem Elektrogerät in Gestalt einer HandWerkzeugmaschine oder eines Sauggeräts oder als Bestandteil eines derartigen Elektrogeräts gemäß der technischen Lehre des Anspruchs 12 vorgesehen.

Es ist vorgesehen, dass die Schaltung mindestens einen Trennschalter zum Trennen einer elektrischen Verbindung zwischen mindestens einem Energiespeicher-Eingangskontakt und der diesem zugeordneten Einspeiseleitung aufweist.

Es ist ein Grundgedanke der vorliegenden Erfindung, dass nicht sämtliche Anschlusskontaktanordnungen mit einem Energiespeicher, beispielsweise einem Akkupack, einer Batterie, einer Brennstoffzelle oder dergleichen, verbunden sein müssen, sondern dass das Elektrogerät wahlweise mit einem oder mehreren Energiespeichern betreibbar ist. Wenn ein Steckplatz bzw. die Anschlusskontaktanordnung für einen Energiespeicher nicht genutzt wird, überbrückt der Verbindungsschalter sozusagen die Anschlusskontakte dieses nicht genutzten Anschlusses. An dieser Stelle sei erwähnt, dass ein Energiespeicher gemäß der Erfindung zweckmäßigerweise mehrere Speicherzellen umfasst. Die Energiespeicher umfassen zweckmäßigerweise Batterien oder Akkupacks, die lösbar am Gehäuse des Elektrogeräts anordenbar sind.

Die Energiespeicheranordnung kann beispielsweise einen ersten Akkupack mit zum Beispiel 12 V und einen zweiten Akkupack mit beispielsweise 15 V umfassen. Werden beide Akkupacks an das Elektrogerät angeschlossen, steht eine Summenspannung von beispielsweise 27 V zur Verfügung, so dass bei gleichem Strom eine höhere Leistung des Elektrogeräts verfügbar ist als z.B. bei nur einem Akkupack mit 12 oder 15 V. Das Elektrogerät ist also variabel mit unterschiedlichen Spannungen betreibbar.

Es ist auch möglich, dass beispielsweise ein Zwischenkreis für einen elektronischen Kommutator des Elektrogeräts mit unterschiedlichen Spannungen versorgt wird, je nachdem, welche oder wie viele Energiespeicher an das Elektrogerät angeschlossen sind, und dass der elektronische Kommutator diese Spannung für den Antriebsmotor aufbereitet.

Die Erfindung sieht vor, dass zusätzlich noch ein Trennschalter vorgesehen ist, der eine oder beide Einspeiseleitungen von den zugeordneten Anschlusskontakten der Anschlusskontaktanordnungen elektrisch trennt. Somit ist es möglich, auch wenn an einem Anschluss bzw. einer Anschlusskontaktanordnung ein Energiespeicher angeschlossen ist, diesen Energiespeicher aktiv vom Versorgungsnetz der Hand-Werkzeugmaschine oder des Sauggeräts zu trennen, bevor anschließend die Einspeiseleitungen durch den Verbindungsschalter sozusagen überbrückt oder kurz geschlossen werden.

Es versteht sich, dass die erfindungsgemäße Schaltungsanordnung nur an einer Anschlusskontaktanordnung des Elektrogeräts, aber auch an mehreren Anschlusskontaktanordnungen vorgesehen sein kann. Beispielsweise ist es möglich, dass eine Anschlusskontaktanordnung immer mit einem Energiespeicher versehen sein muss, so dass quasi ein Grundbetrieb der Hand-Werkzeugmaschine oder des Sauggeräts möglich ist, während der andere Anschluss, z.B. Steckplatz, zum Anschluss eines Energiespeichers nicht immer genutzt sein muss. Die sozusagen optional nutzbare Anschlusskontaktanordnung(en) für den zweiten oder weiteren Energiespeicher hat zweckmäßigerweise den erfindungsgemäß vorgesehenen Verbindungsschalter, zweckmäßigerweise auch einen oder mehrere Trennschalter für die Einspeiseleitungen.

Erfindungsgemäß ist eine Steuerung zur sequenziellen Ansteuerung des mindestens einen Trennschalters und des mindestens einen Verbindungsschalters vorgesehen, die bei einer Deaktivierung der Anschlusskontakte einer jeweiligen Anschlusskontaktanordnung zunächst den Trennschalter zur Trennung des ersten Anschlusskontakts von der ersten Einspeiseleitung und/oder des zweiten Anschlusskontakts von der zweiten Einspeiseleitung und anschließend den Verbindungsschalter zur elektrischen Verbindung der ersten und zweiten Einspeiseleitung ansteuert. Somit ist also gewährleistet, dass zunächst für den Fall, dass an der Anschlusskontaktanordnung noch ein Energiespeicher angeordnet ist, dieser zunächst vom Versorgungsnetz des Elektrogeräts elektrisch getrennt wird, wofür eine oder beide Einspeiseleitungen elektrisch von den jeweiligen Anschlusskontakten getrennt werden, und anschließend der Verbindungsschalter die beiden Einspeiseleitungen sozusagen überbrückt bzw. kurz schließt. Selbstverständlich ist bei der Aktivierung der Anschlusskontakte der jeweiligen Anschlusskontaktanordnung die umgekehrte Vorgehensweise zweckmäßig, d.h. dass zunächst der Verbindungsschalter geöffnet wird, so dass die beiden ersten und zweiten Einspeiseleitungen elektrisch voneinander getrennt sind und anschließend die Verbindung zwischen der jeweiligen Einspeiseleitung und dem zugeordneten Anschlusskontakt hergestellt wird, d.h. der oder die Trennschalter die getrennte Verbindung zwischen den Einspeiseleitungen und den jeweiligen Anschlusskontakten herstellen.

Diese Vorgehensweise kann bei dem Elektrogerät abhängig davon sein, ob die Anschlusskontakte genutzt werden. Wenn also beispielsweise die elektrischen Anschlusskontakte für den Energiespeicher nicht genutzt sind, dort also extern keine Spannung anliegt, ist die Trennung der Anschlusskontakte von den Einspeiseleitungen nicht notwendig. Beispielsweise umfasst die Steuerung oder das Elektrogerät eine entsprechende Spannungserfassungseinrichtung, die überprüft, ob die Anschlusskontakte einer jeweiligen Anschlusskontaktanordnung genutzt werden.

Der mindestens eine Trennschalter und/oder der mindestens eine Verbindungsschalter sind zweckmäßigerweise elektronische Schalter. Bevorzugt handelt es sich um leistungselektronische Komponenten, beispielsweise MosFets. Der Vorteil der elektronischen Schalter ist, dass sie vergleichsweise geringe Verlustleistungen haben. Es versteht sich, dass auch elektromechanische Schalter möglich sind, beispielsweise Relais.

Der mindestens eine Trennschalter und der mindestens eine Verbindungsschalter können beispielsweise auch als Wechselschalter ausgestaltet sein oder Bestandteile eines Wechselschalters bilden. Und auf diesem Wege lässt sich sehr einfach die Schaltfolge realisieren, d.h. die Steuerung zur sequenziellen Ansteuerung des Trennschalters und des Verbindungsschalters kann mechanisch realisiert sein bzw. einen Bestandteil des jeweiligen Wechselschalters bilden. Selbstverständlich ist auch ein elektronischer Wechselschalter möglich.

Jede oder mindestens zwei Anschlusskontaktanordnungen der Hand-Werkzeugmaschine sind zweckmäßigerweise mit jeweils einem Verbindungsschalter zur elektrischen Überbrückung und Verbindung der Anschlusskontakte der Anschlusskontaktanordnungen und einem Trennschalter zum elektrischen Trennen mindestens eines Anschlusskontakts von der jeweiligen Einspeiseleitung ausgestattet. Somit ist es also möglich, dass an beiden oder jeden Anschlusskontaktanordnungen wahlweise ein Energiespeicher angeschlossen werden kann oder auch nicht.

Selbstverständlich ist es auch denkbar, dass pro Anschlusskontaktanordnung jeweils nur ein entsprechender Verbindungsschalter vorgesehen ist. Der Trennschalter ist nicht unbedingt nötig, jedoch zweckmäßig.

Es ist auch möglich, dass beispielsweise zwei Anschlusskontaktanordnungen für einen zweiten und einen dritten Energiespeicher mit einem Verbindungsschalter zur elektrischen Verbindung und Überbrückung der mit den Anschlusskontakten der verbundenen Einspeiseleitungen versehen sind, während eine Anschlusskontaktanordnung für beispielsweise einen ersten Energiespeicher diese vorteilhafte Beschaltung nicht aufweist. Der erste Energiespeicher stellt beispielsweise die Grundversorgung des Elektrogeräts sicher.

An eine oder mehrere der von der Schaltung des Elektrogeräts oder des Energiespeichers bereitgestellte Versorgungsspannungen, beispielsweise die Energiespeicher-Versorgungsspannung eines der Energiespeicher oder die Summe von zwei oder weiteren Energiespeicher-Versorgungsspannungen, kann eine Stromversorgungseinrichtung angeschlossen sein, die unterschiedliche Versorgungspotenziale und/oder mindestens ein stabilisiertes Versorgungspotenzial für die elektrischen Komponenten des Elektrogeräts bereitstellt. Beispielsweise bereitet die Stromversorgungseinrichtung die eingangsseitig bereitgestellten Spannungen, zum Beispiel die Energiespeicher-Versorgungsspannung eines Energiespeichers, auf und stellt mindestens ein stabilisiertes Ausgangspotenzial, beispielsweise 3,3 Volt, 5 Volt oder dergleichen ausgangsseitig zur Verfügung. Diese Stromversorgungseinrichtung oder Spannungsaufbereitungseinrichtung kann auch an Bord des erfindungsgemäßen Energiespeichers vorgesehen sein.

Bevorzugt ist eine Steuerung und/oder die erwähnte Stromversorgungseinrichtung vorgesehen, die mit den Anschlusskontakten einer der Anschlusskontaktanordnungen verbunden ist, so dass der an die Anschlusskontaktanordnung angeschlossene jeweilige erste oder mindestens eine zweite Energiespeicher die Steuerung oder die Stromversorgungseinrichtung mit elektrischer Energie versorgt. Somit genügt also beispielsweise die Energieversorgung über eine der Anschlusskontaktanordnungen, um die Steuerung und/oder die Stromversorgungseinrichtung mit elektrischer Energie zu versorgen.

Vorteilhaft ist vorgesehen, dass die Steuerung und/oder die Stromversorgungseinrichtung nur mit einer einzigen der Anschlusskontaktanordnungen elektrisch verbunden ist, so dass ein an die Anschlusskontaktanordnung angeschlossene Energiespeicher zur elektrischen Versorgung der Steuerung und/oder der Stromversorgungseinrichtung ausreicht. Die Steuerung oder die Stromversorgungseinrichtung ist dazu beispielsweise mit den Einspeiseleitungen dieser Anschlusskontaktanordnung verbunden und wird somit mit der Energiespeicher-Versorgungsspannung des an diese Anschlusskontaktanordnung angeschlossenen Energiespeichers mit elektrischer Energie versorgt.

Es ist aber auch möglich, dass die Steuerung und/oder die Stromversorgungseinrichtung mit der jeweiligen Maschinen-Versorgungsspannung elektrisch verbunden ist, wobei diese je nach Bestückung mit Energiespeichern unterschiedlich hoch ausfallen kann. Die Steuerung und/oder die Stromversorgungseinrichtung wird z.B. mit der Summe der über die Anschlusskontaktanordnungen eingespeisten Energiespeicher-Versorgungsspannungen mit elektrischer Energie versorgt.

Dem elektrischen Antriebsmotor ist zweckmäßigerweise eine Endstufe zugeordnet, an die der Antriebsmotor angeschlossen ist. Die Endstufe wird mit der Maschinen-Versorgungsspannung versorgt. Die Endstufe umfasst beispielsweise einen elektronischen Kommutator für den zweckmäßigerweise bürstenlosen, elektronisch kommutierten Antriebsmotor. Der elektronische Kommutator umfasst beispielsweise einen Frequenzrichter.

Bevorzugt Erfindungsgemäß ist mindestens eine Spannungserfassungseinrichtung zur Erfassung einer Spannung des jeweiligen Energiespeichers vorgesehen. Die Spannungserfassungseinrichtung dient beispielsweise dazu, einen jeweiligen Anschlusskontaktanordnung bei Unterschreiten eines dem jeweiligen Energiespeicher zugeordneten unteren Spannungsgrenzwertes zu deaktivieren. Dadurch wird der Energiespeicher beispielsweise vor einer Tiefentladung geschützt. Es ist auch möglich, dass die von der Spannungserfassungseinrichtung ermittelte Spannungsinformation zur Deaktivierung des jeweiligen Energiespeichers dann genutzt wird, wenn der Energiespeicher einen oberen Spannungsgrenzwert überschreitet. Dadurch wird das Elektrogerät geschützt.

Bevorzugt ist es, wenn jeder Anschlusskontaktanordnung eine Spannungserfassungseinrichtung zugeordnet ist. Beispielsweise ist die Spannungserfassungseinrichtung mit den jeweiligen Anschlusskontakten der Anschlusskontaktanordnungen elektrisch verbunden.

Es ist weiterhin zweckmäßig, wenn mindestens einer Anschlusskontaktanordnung, vorzugsweise mehreren oder allen Anschlusskontaktanordnungen, eine Datenerfassungseinrichtung zur Erfassung mindestens einer dem jeweiligen Energiespeicher zugeordneten Information zugeordnet ist. Beispielsweise kommuniziert die Datenerfassungseinrichtung über einen Datenbus mit dem jeweiligen Energiespeicher. Die Informationen umfasst beispielsweise eine Anzahl und/oder eine Art von Speicherzellen des Energiespeichers. Auch eine Temperatur des Energiespeichers und/oder eine Nennspannung des Energiespeichers und/oder ein Nennstrom des Energiespeichers können zweckmäßigerweise von der Datenerfassungseinrichtung erfasst werden. Es ist auch möglich, dass die Datenerfassungseinrichtung den Typ des Energiespeichers erfasst. Über den Datenbus werden beispielsweise Daten vom Energiespeicher an die Datenerfassungseinrichtung gesendet. Der Datenbus kann beispielsweise von den Anschlusskontakten separate Datenkontakte nutzen. Es ist aber auch möglich, dass über die Anschlusskontakte, die an sich zu elektrischen Energieversorgung vorgesehen sind, Daten des Datenbusses oder mindestens eine der vorgenannten Energiespeicher-Informationen vom Energiespeicher an die Datenerfassungseinrichtung übertragen werden.

Eine vorteilhafte Ausgestaltung sieht vor, dass mindestens ein Verbindungsschalter zwischen den Einspeiseleitungen mit einer Bypass-Diode versehen ist, zum Beispiel einer in den Schalter integrierten Bodydiode, derart, dass der Verbindungsschalter auch in seiner Offenstellung einen zur Versorgung einer Steuerung und/oder einer Stromversorgungseinrichtung des Elektrogeräts ausreichenden Strom leitet. Somit kann zumindest beispielsweise derjenige Strom geleitet werden, der zum Betrieb oder Ansteuern des Verbindungsschalters notwendig ist.

Aber auch eine insgesamt zur Steuerung des Elektrogeräts vorgesehene Steuerung, beispielsweise zur Einstellung der Drehzahl und/oder Leistung des Antriebsmotors, zur Überwachung des Antriebsmotors oder dergleichen vorgesehene Steuerung, kann anhand der Bypass-Diode mit elektrischer Energie versorgt werden, auch wenn die Anschlusskontakte beispielsweise nicht durch einen Energiespeicher mit Spannung versorgt werden oder eben kein Energiespeicher an diese angeschlossen ist.

Die Bypassdiode leitet den Strom, der zum Betrieb der Steuerung und/oder der Stromversorgungseinrichtung ausreicht. Vorteilhaft ist es jedoch so, dass der über die Bypassdiode fließende Strom nicht ausreicht, um beispielsweise den Antriebsmotor zu betreiben.

Es versteht sich, dass die Anschlusskontaktanordnungen auch sozusagen doppelte Anschlusskontakte haben können, so dass beispielsweise 2 Energiespeicher parallel an die Anschlusskontakte einer jeweiligen Anschlusskontaktanordnung angeschlossen werden können.

Die Anschlusskontakte können beispielsweise an einem Gerätegehäuse des Elektrogerätes vorgesehen sein. An das Gerätegehäuse können einer oder beide Energiespeicher, gegebenenfalls auch ein dritter oder weiterer Energiespeicher, direkt angeschlossen werden.

Es ist aber auch ein Konzept mit einer Durchleitung möglich, d.h. dass beispielsweise ein Energiespeicher als Träger und/oder elektrischer Verbinder für einen weiteren Energiespeicher dient und dessen elektrische Energie an das Elektrogerät weiter leitet.

Eine Ausführungsform sieht beispielsweise vor, dass das Elektrogerät einen ersten Energiespeicher aufweist, der mit den ersten und zweiten Anschlusskontaktanordnungen des Elektrogeräts verbindbare erste und zweite Ausgangskontakte aufweist. Die ersten Ausgangskontakte dienen beispielsweise dazu, die Energie des ersten Energiespeichers in das Elektrogerät einzuspeisen. Die ersten Ausgangskontakte sind mit mindestens einer Speicherzelle des ersten Energiespeichers verbunden. Die zweiten Ausgangskontakte sind zweckmäßigerweise mit Eingangskontakten des ersten Energiespeichers verbunden, an die ein zweiter Energiespeicher anschließbar ist. Der erste Energiespeicher leitet die Versorgungsspannung dieses zweiten Energiespeichers an das Elektrogerät weiter. Somit ist es möglich, dass der zweite Energiespeicher über die zweite Anschlusskontaktanordnung des Elektrogeräts elektrische Energie einspeist. Der zweite Energiespeicher ist beispielsweise huckepack am ersten Energiespeicher anordenbar.

Es ist aber auch möglich, dass ein Energiespeicher, der gemäß der obengenannten weiteren Ausführungsform der Erfindung ausgestaltet ist, mit einer an sich konventionellen elektrischen Maschine verbunden wird. Der Energiespeicher gemäß dieser Ausführungsform dient zur Verwendung mit einem Elektrogerät und kann wahlweise nur seine eigene elektrische Energie in das Elektrogerät einspeisen, aber auch elektrische Energie eines zweiten Energiespeichers, der am ersten Energiespeicher anordenbar ist. Die Schaltung mit dem Verbindungsschalter, um den zweiten Energiespeichers sozusagen aktiv zu schalten oder auch zu deaktivieren, wenn die Energiespeicher-Eingangskontakten des zweiten Energiespeichers nicht genutzt werden, ist an Bord des Ersten, ebenfalls erfindungsgemäßen Energiespeichers. Somit kann also das Elektrogerät beispielsweise nur mit dem ersten Energiespeicher betrieben werden, aber auch in Kombination mit dem ersten und dem zweiten Energiespeicher, wobei der erste Energiespeicher die Energiespeicher-Versorgungsspannungen des ersten und zweiten Energiespeichers dann in Serie geschaltet.

Auch die oben erläuterten weiteren Ausgestaltungen der Erfindung, die am erfindungsgemäßen Elektrogerät vorteilhaft sind, können selbstverständlich auch bei dem die erfindungsgemäße Schaltung zum Aktivieren und/oder Deaktivieren des zweiten oder weiteren Energiespeichers aufweisenden erfindungsgemäßen Energiespeicher vorteilhaft Anwendung finden. So kann beispielsweise an Bord dieses Energiespeichers eine Stromversorgungseinrichtung zu Bereitstellung unterschiedlicher Spannungen oder dergleichen vorgesehen sein.

Der erfindungsgemäße, sozusagen "erste", Energiespeicher, an den der zweite Energiespeicher anschließbar ist, hat zweckmäßigerweise gleichartige mechanische Steckkonturen für den zweiten Energiespeicher wie das Elektrogerät, an das der erste Energiespeicher anschließbar ist.

Nachfolgend werden Ausführungsbeispiele der Erfindung anhand der Zeichnung erläutert. Es zeigen:
- Figur 1: eine perspektivische Ansicht eines ersten Ausführungsbeispiels einer Hand-Werkzeugmaschine als erfindungsgemäßes Elektrogerät mit zwei Energiespeichern,
- Figur 2: ein Schaltbild einer ersten Schaltungsvariante und
- Figur 3: ein Schaltbild einer zweiten Schaltungsvariante des Elektrogeräts gemäß Figur 1,
- Figur 4: eine Seitenansicht eines zweiten Ausführungsbeispiels einer Hand-Werkzeugmaschine als erfindungsgemäßes Elektrogerät mit zwei Huckepack angeordneten Energiespeichern, und
- Figur 5: eine Schaltung für eine Energiespeicheranordnung in der Art des Ausführungsbeispiels gemäß Figur 4, bei der jedoch der eine Energiespeicher eine Schaltung zur Serienschaltung der Energiespeicher-Versorgungsspannungen beider Energiespeicher aufweist.

Bei den Ausführungsbeispielen sind gleiche oder gleichartige Komponenten mit denselben Bezugsziffern versehen. Unterschiede werden in der Regel dadurch deutlich gemacht, dass die Bezugszeichen sich um jeweils 100 voneinander unterscheiden.

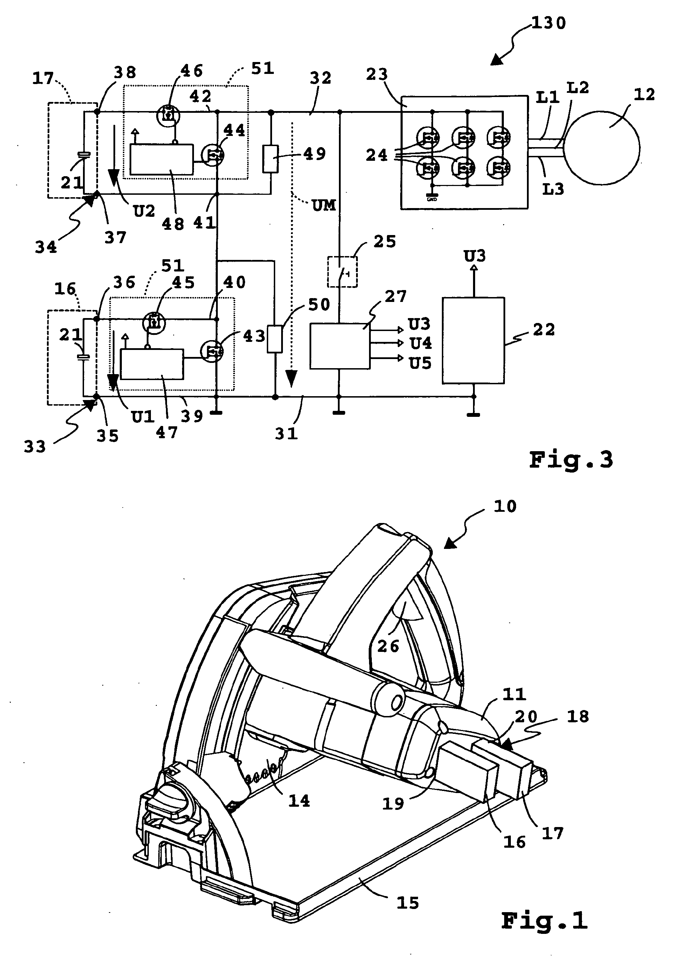

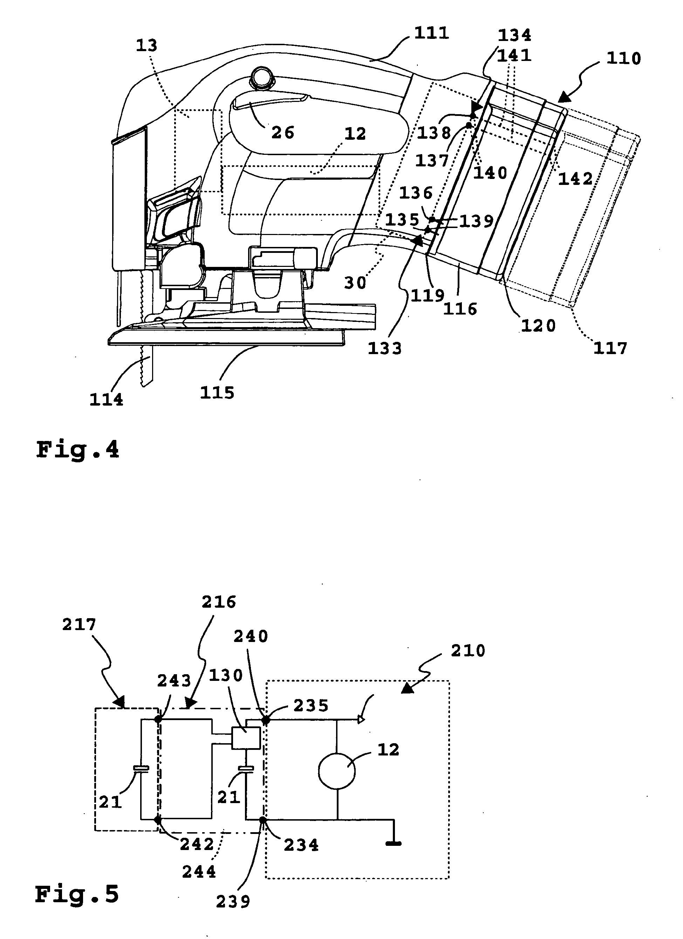

Die in den Figuren 1 und 4 beispielhaft dargestellten Hand-Werkzeugmaschinen 10, 110 sind jeweils erfindungsgemäße Elektrogeräte. Bei beiden Werkzeugmaschinen 10 und 110 handelt es sich um elektrische Sägen, wobei selbstverständlich auch andere Typen von Hand-Werkzeugmaschinen im Sinne der Erfindung sind, beispielsweise Schleifmaschinen, Bohrmaschinen, Fräsen oder dergleichen. Auch ein Sauggerät kann auf die nachfolgend beschriebene, innovative Weise betrieben werden.

Die Hand-Werkzeugmaschinen 10 und 110 weisen jeweils Gerätegehäuse 11, 111 auf, in denen elektrische Antriebsmotoren 12 angeordnet sind. Die elektrischen Antriebsmotoren 12 treiben direkt oder über ein Getriebe 13 ein Werkzeug 14, 114 an, beispielsweise ein Sägeblatt. Bei dem Werkzeug 14 handelt es sich beispielsweise um ein Kreis-Sägeblatt, während das Werkzeug 114 ein Sägeblatt einer Stichsäge ist. Die beiden Hand-Werkzeugmaschinen 10 und 110 sind beispielsweise eine Kreissäge, beispielsweise eine Tauchsäge, und eine Stichsäge. Darauf kommt es jedoch im Detail nicht an. Beim Betrieb stehen die Werkzeuge 14, 114 nach unten vor Sägetisch 15, 115 der Hand-Werkzeugmaschinen 10 und 110 vor, so dass sie beispielsweise in ein nicht dargestelltes Werkstück Sägeschnitte einbringen können.

Zur Versorgung der Antriebsmotoren 12 mit einer Maschinen-Versorgungsspannung UM dienen Energiespeicher 16, 17 und 116. 117.

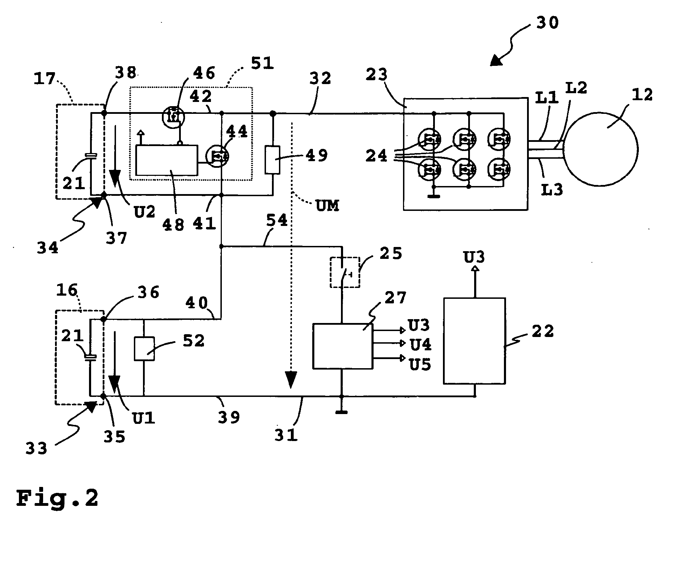

Bei der Hand-Werkzeugmaschine 10 sind elektrische Energiespeicher 16 und 17 direkt an der an einen Energiespeicheranschluss 18 mit Steckplätzen 19 und 20 des Gerätegehäuses 11 direkt angeschlossen. Beispielsweise sind die Steckplätze 19 und 20 als Steckaufnahmen zum Anstecken der Energiespeicher 16 und 17 vorgesehen. Die Energiespeicher 16 und 17 umfassen eine oder mehrere Speicherzellen 21, von denen jeweils eine beispielsweise in den Figuren 2 und 3 angedeutet ist.

Die Hand-Werkzeugmaschinen 10 kann nur mit dem Energiespeicher 16 oder mit beiden Energiespeichern 16 und 17 zusammen betrieben werden. Beim Schaltungskonzept der Schaltung 30 gemäß Figur 2 muss zumindest der Energiespeicher 16 gesteckt sein. Jedenfalls muss der Steckplatz 19 bestückt sein. Beim Schaltungskonzept der Schaltung 130 gemäß Figur 3 ist es möglich, wahlweise nur den Steckplatz 19 oder nur den Steckplatz 20 mit einem Energiespeicher 16 oder 17 zu versehen oder beide Steckplätze 19 und 20 mit Energiespeichern 16 und 17 zu versehen.

Die Hand-Werkzeugmaschine 110 ist so ausgestaltet, dass sie an ihrem Steckplatz 119 stets den Energiespeicher 116 benötigt, so dass sie eine Grundversorgung hat, wobei der Energiespeicher 116 zusätzlich noch einen Steckplatz 120 aufweist, an den der Energiespeicher 117 anschließbar ist. Der Energiespeicher 116 leitet die vom Energiespeicher 117 bereitgestellte Energiespeicher-Versorgungsspannung U2 sozusagen bis zur Hand-Werkzeugmaschine 110 durch. Wenn nur der Energiespeicher 116 an der Hand-Werkzeugmaschine 110 angeordnet ist, genügt dieser zu deren Energieversorgung.

Wenn aber am Energiespeicher 116 zusätzlich noch der Energiespeicher 117 angeordnet ist, wird die Hand-Werkzeugmaschine 110 von beiden Energiespeichern 116 und 117 mit elektrischer Energie versorgt. Es stehen die Energiespeicher-Versorgungsspannungen U1 und U2 für die Hand-Werkzeugmaschine 110 bereit.

Die Schaltungskonzepte gemäß Figuren 2 und 3 sind bei beiden Hand-Werkzeugmaschinen 10 und 110 ohne weiteres realisierbar.

Die Hand-Werkzeugmaschinen 10 und 110 weisen eine Steuerung 22 auf, die zur Ansteuerung des Antriebsmotors 12 dient. Beispielsweise umfasst die Steuerung 22 einen Mikrocontroller.

Der Antriebsmotor 12 wird beispielsweise von einer Endstufe 23 mit elektrischer Energie versorgt. Beispielsweise umfasst die Endstufe 23 einen elektronischen Kommutator mit Schaltern 24, die den Antriebsmotor 12 mit elektrischer Spannung versorgen. Die elektrische Spannung ist beispielsweise dreiphasig, was durch Leitungen L1, L2 und L3 angedeutet ist. Auch darauf kommt es nicht an.

Jedenfalls ist die Endstufe 23 und/oder der Antriebsmotor 12 für einen Betrieb mit unterschiedlichen Maschinen-Versorgungsspannungen UM ausgelegt, beispielsweise wahlweise mit 12 V, 15 V, 24 V, 30 V, 27 V oder dergleichen.

Mithilfe eines Hauptschalters 25, der durch ein Betätigungselement 26, zum Beispiel eine Drucktaster oder dergleichen, der Hand-Werkzeugmaschine 10, 110 betätigbar ist, ist der Antriebsmotor 12 einschaltbar, vorzugsweise auch in seiner Drehzahl regelbar. Der Hauptschalter 25 schaltet beispielsweise eine Stromversorgungseinrichtung 27, die eine oder mehrere Versorgungsspannungen, beispielsweise 3,3 Volt und/oder 5 V und/oder 15 V, für die Steuerung 22 bereitstellt, ein und aus. Diese Ausgangsspannungen der Stromversorgungseinrichtung 27 sind beispielsweise mit U3, U4 und U5 bezeichnet.

Die Stromversorgungseinrichtung 27 ist universell mit verschiedenen Spannungen betreibbar, beispielsweise mit minimal 12 V und maximal 30 V oder 36 V. Auch hier ist also eine universelle Spannungsversorgung möglich.

Somit ist also die Hand-Werkzeugmaschine 10 und 110 prinzipiell mit verschiedenen Versorgungsspannungen betreibbar, so dass es möglich ist, wahlweise einen oder beide der Energiespeicher 16 und 17, 116 und 117 an den Hand-Werkzeugmaschinen 10 und 110 anzuordnen und diese damit zu betreiben. Selbst auf die individuelle Energiespeicher-Versorgungsspannung U1 und U2 der Energiespeicher 16, 17 bzw. 116, 117 kommt es nicht an. So kann beispielsweise der Energiespeicher 16 als seine Energiespeicher-Versorgungsspannung U1 12 V bereitstellen, aber auch 15 V oder 18 V.

Die in den Figuren 2 und 3 dargestellten Schaltungen 30 und 130 umfassen eine Versorgungsleitung 31, die einem Massepotenzial zugeordnet ist, sowie eine Versorgungsleitung 32. Zwischen den Versorgungsleitungen 31, 32 ist die Maschinen-Versorgungsspannung UM vorgesehen.

Die Maschinen-Versorgungsspannung UM kann durch einen oder beide Energiespeicher 16, 17 bzw. 116 und 117 bereitgestellt werden. In den Schaltungen 30 und 130 sind die Energiespeicher 16 und 17 eingezeichnet, wobei selbstverständlich an deren Stelle auch die Energiespeicher 116 und 117 der Hand-werkzeugmaschine 110 vorgesehen sein könnten.

Der Energiespeicheranschluss 18, 118 umfasst Anschlusskontaktanordnungen 33, 34, 133, 134 mit Anschlusskontakten 35-38 bzw. 135-138. Die Anschlusskontakte 35-38 und 135-138 entsprechen einander.

Die Hand-Werkzeugmaschine 110 kann wahlweise die Schaltung 30 oder 130 aufweisen, wobei exemplarisch die Schaltung 30 angedeutet ist.

Das Schaltungskonzept der Hand-Werkzeugmaschine 110 sieht vor, dass der Energiespeicher 116 die Verbindung zur HandWerkzeugmaschine 110 herstellt und zudem auch den Energiespeicher 117 bei Bedarf ankoppelt. Im Prinzip wäre es natürlich auch denkbar, dass an die Anschlusskontakte 135-138 der Hand-Werkzeugmaschine 110 jeweils individuell direkt ein Energiespeicher angekoppelt wird (nicht dargestellt).

Der Energiespeicher 116 leitet die Versorgungsspannung des Energiespeichers 117 zu den Anschlusskontakten 135-138 durch. Beispielsweise hat der Energiespeicher 116 erste und zweite Ausgangskontakte 139, 140. Die Ausgangskontakte 139 sind mit einer oder mehreren Speicherzellen des Energiespeichers 116 verbunden, während die anderen Ausgangskontakte 140 über Leitungen 141 mit Eingangskontakten 142 verbunden sind, einen die der Energiespeicher einen 117 anschließbar ist. Die Leitungen 141 leiten also die Energiespeicher-Versorgungsspannung U2 des Energiespeichers 117 zur Schaltung 30 oder 130 der Hand-Werkzeugmaschine 110 weiter.

Die Anschlusskontakte 35 und 36, 135 und 136 sind über Einspeiseleitungen 39 und 40 mit der Schaltung 30 oder 130 verbunden. Die Anschlusskontakte 37 und 38, 137 und 138 sind über Einspeiseleitungen 41 und 42 mit den Schaltungen 30 oder 130 verbunden. Die Einspeiseleitung 39 ist mit der Versorgungsleitung 31, also dem Massepotenzial, elektrisch direkt verbunden. Die Einspeiseleitung 42 ist mit der anderen Versorgungsleitung 32, also dem oberen Potenzial bzw. der Maschinen-Versorgungsspannung UM, verbunden.

Die Einspeiseleitungen 40 und 41 sind ebenfalls miteinander elektrisch verbunden.

An das gemeinsame Potenzial der Einspeiseleitungen 40 und 41 ist bei der Schaltung 30 eine Leitung 54 angeschlossen, an der somit die Energiespeicher-Versorgungsspannung U1 des Energiespeichers 16 oder 116 gegenüber der Versorgungsleitung 31 bzw. dem Massepotenzial zur Verfügung steht. Bei der Schaltung 30 ist an die Leitung 54 der Hauptschalter 25 elektrisch angebunden, welcher seinerseits mit der Stromversorgungseinrichtung 27 elektrisch in Serie geschaltet ist, so dass durch Drücken bzw. Einschalten des Hauptschalters 25 die Stromversorgungseinrichtung 27 mit elektrischer Energie versorgt wird (mit der Energiespeicher-Versorgungsspannung U1) und somit ein grundsätzlicher Betrieb der Hand-Werkzeugmaschine 10 oder 110 möglich ist. Dadurch erhält nämlich die Steuerung 22 ihre notwendige Versorgungsspannung (U3) .

Bei der Schaltung 130 ist der Eingang des Hauptschalters 25 mit der Versorgungsleitung 32 elektrisch verbunden, so dass beim Einschalten des Hauptschalters 25 die Stromversorgungseinrichtung 27 die Maschinen-Versorgungsspannung UM, also die Summe der Versorgungsspannungen U1 und U2, erhält. Der Hauptschalter 25 und die Stromversorgungseinrichtung 27 sind also in Serie geschaltet und an die Maschinen-Versorgungsspannung UM angeschlossen.

Bei der Schaltung 30 ist also zum grundsätzlichen Betrieb der Hand-Werkzeugmaschinen 10 oder 110 notwendig, dass der Steckplatz 19, 119 mit einem Energiespeicher 16 bzw. 116 bestückt ist, so dass die Energiespeicher-Versorgungsspannung U1 als Maschinen-Versorgungsspannung UM bereit steht. Es ist aber möglich, die Hand-Werkzeugmaschine 10 oder 110 mit und ohne den weiteren Energiespeicher 17 oder 117 zu betreiben. Wenn der Steckplatz 20 oder 120 nicht bestückt ist, kann eine Steuerungsfunktion 48 einen Verbindungsschalter 44 zum Schließen der Verbindung zwischen den Einspeiseleitungen 42 und 41 ansteuern, mit denen der Verbindungsschalter 44 elektrisch verbunden ist. Bei dem Verbindungsschalter 44 handelt es sich beispielsweise um einen leistungselektronischen Schalter, insbesondere einen MosFet, wobei aber auch elektromechanische Schalter, ein Relais oder dergleichen, ohne weiteres möglich sind.

Die Steuerungsfunktion 48 kann eine Teilfunktion der Steuerung 22 sein oder als eine von der Steuerung 22 separate Schaltung oder Schaltlogik ausgestaltet sein.

Eine vorteilhafte Ausgestaltung sieht vor, dass in eine oder beide der Einspeiseleitungen 41, 42 ein weiteres Schaltelement, nämlich ein Trennschalter 46 geschaltet ist, der durch die Steuerungsfunktion 48 geöffnet wird, solange der Verbindungsschalter 44 geschlossen ist. Somit kann also beispielsweise dann, wenn der Steckplatz 20 bestückt ist, dieser dennoch vollständig inaktiv geschaltet werden.

Vorteilhaft ist eine Spannungserfassungseinrichtung 49 vorgesehen, die die jeweilige Spannung U2 des Energiespeichers 17, 117 erfasst. Wenn diese einen unteren Grenzwert unterschreitet, so dass die Gefahr einer Tiefentladung des Energiespeichers 17 oder 117 droht, steuert die Steuerungsfunktion 48 beispielsweise zunächst den Trennschalter 46 zum Trennen der Einspeiseleitung 42 vom Anschlusskontakt 38 und anschließend den Verbindungsschalter 44 zum Schließen einer Verbindung zwischen den Einspeiseleitungen 41 und 42 an, so dass die Anschlusskontakte 37 und 38 elektrisch quasi isoliert sind, aber dennoch die Energiespeicher-Versorgungsspannung U1 des anderen Energiespeicher 16 oder 116 zum Betrieb der Hand-Werkzeugmaschine 10 oder 110 zur Verfügung steht.

Die Steuerungsfunktion 48 und der Verbindungsschalter 44, zweckmäßigerweise auch der Trennschalter 46, sind beispielsweise Bestandteile eines Anschaltmoduls 51 der Schaltung 30, 130.

Die Schaltung 130 hat auch für den anderen Energiespeicher 16 oder 116 ein Anschaltmodul 51, mit denen der Energiespeicher 16 oder 116 aktivierbar und/oder deaktivierbar ist. Wenn also beispielsweise der Steckplatz 20 oder 120 nicht genutzt wird, überbrückt das Anschaltmodul 51 die Anschlusskontakte 37, 38 oder 137, 138.

Zweckmäßigerweise ist eine zusätzliche Spannungserfassungseinrichtung 50 für den Energiespeicher 16 oder 116 vorgesehen. Wenn eine Tiefentladung des Energiespeichers 16 und 116 droht, d.h. die Spannung U1 unter einen unteren Grenzwert sinkt, der Steckplatz 19, 119 nicht bestückt ist oder dergleichen, kann die zusätzliche Anschaltung bzw. das Anschaltmodul 51 diesen Steckplatz 19, 119 bzw. die Anschlusskontakte 35, 36 deaktivieren. Beispielsweise steuert eine Steuerungsfunktion 47 dann einen Trennschalter 45, der in die Verbindung zwischen die Einspeiseleitung 40 und den Anschlusskontakt 36, 136 geschaltet ist, zum Trennen dieser Verbindung an.

Die Spannungserfassungseinrichtungen 49 und 50 umfassen beispielsweise einen Messwiderstand oder Shunt.

Den Anschlusskontaktanordnungen 33 und 34 (bzw. 133 und 134) ist zweckmäßigerweise eine Datenerfassungseinrichtung 52 zugeordnet. Beispielhaft ist eine den Anschlusskontakten 35 und 36 zugeordnete Datenerfassungseinrichtung 52 eingezeichnet. Die Datenerfassungseinrichtung erfasst beispielsweise Kennwerte des Energiespeichers 16, z.B. dessen Typkennung oder dergleichen. Beispielsweise kann die Datenerfassungseinrichtung 52 eine Nennspannung oder dergleichen des Energiespeichers 16 erfassen. Selbstverständlich können auch den anderen Anschlusskontakten 37, 38 (bzw. 137 und 138) entsprechende Datenerfassungseinrichtungen 52 zugeordnet sein (nicht dargestellt).

Die Datenerfassungseinrichtung 52 ist beispielsweise mit den Einspeiseleitungen 39, 40 elektrisch verbunden, so dass von dem Energiespeicher 16 kommunizierte Daten über diese Einspeiseleitungen 39 und 40 durch die Datenerfassungseinrichtung 52 erfassbar sind. Selbstverständlich könnten auch separate Kontakte, beispielsweise für einen Datenbus zur Kommunikation zwischen einerseits der Schaltung 30, 130 oder der Datenerfassungseinrichtung 52 und andererseits dem Energiespeicher 16, 17 vorgesehen sein (nicht dargestellt).

Der in Figur 5 dargestellte weitere, innovative Energiespeicher 16 kann an Anschlusskontakte 235, 236 einer Anschlusskontaktanordnung 218 einer konventionellen, d.h. nicht erfindungsgemäßen Hand-Werkzeugmaschine oder ein entsprechendes konventionelles Sauggerät, beispielsweise eine Hand-Werkzeugmaschine 210, angeschlossen werden.

Der Energiespeicher 16 weist beispielsweise die Schaltung 30 oder 130 auf, die zweckmäßigerweise an Bord, vorzugsweise innerhalb eines Gehäuses des Energiespeichers 216 angeordnet ist. Die Schaltung 30 oder 130 ermöglicht es, dass der Energiespeicher 216 an seinen Energiespeicher-Ausgangskontakten 239, 240 zum einen eine Energiespeicher-Versorgungsspannung U1 seiner Speicherzellen 21 bereitzustellen, zum andern aber auch wahlweise die Energiespeicher-Versorgungsspannung U2 von Speicherzellen 21 eines 2. Energiespeichers 217, der am Energiespeicher 216 anordenbar ist.

Der Energiespeicher 217 speist beispielsweise über Energiespeicher-Eingangskontakte 242 und 243 die Versorgungsspannung U2 ein. Wenn der Energiespeicher 117 nicht am Energiespeicher 216 angeordnet ist, liefert der Energiespeicher 216 beispielsweise nur seine eigene Versorgungsspannung U1 an den Ausgangskontakten 239, 240. Ist jedoch der zweite Energiespeicher 117 auch angeschlossen, steht an den Ausgangskontakte 239, 240 die Summenspannung aus den Versorgungsspannungen U1 und U2 zur Verfügung, also eine höhere Versorgungsspannung.

Die Variante des Energiespeichers 216 mit der Schaltung 130 kann vorsehen, dass der Energiespeicher 216 dann, wenn die Spannung seiner eigenen Speicherzellen 21 nicht ausreicht und der Energiespeicher 217 angeschlossen ist, sich quasi selbst abzuschalten und nur die vom Energiespeicher 217 bereitgestellte Energiespeicher-Versorgungsspannung U2 an den Ausgangskontakten 239, 240 für das Elektrogerät 110 bereitzustellen.

Die Verbindungsschalter 43, 44 weisen zweckmäßigerweise eine Bypass-Diode 53 auf, die es ermöglicht, dass selbst dann, wenn der jeweilige Verbindungsschalter 43 oder 44 seiner Offenstellung oder nicht-leitende Stellung hat, einen zumindest zur Versorgung der Stromversorgungseinrichtung 27 ausreichenden Strom durch zu leiten.

## Patentansprüche

1. Elektrogerät in Gestalt einer Hand-Werkzeugmaschine (10; 110) oder eines Sauggeräts, wobei das Elektrogerät einen elektrischen Antriebsmotor (12), ein Versorgungsnetz und einen Energiespeicheranschluss (18) für eine elektrische Energiespeicheranordnung zur Versorgung des Antriebsmotors (12) über das Versorgungsnetz aufweist, wobei der Energiespeicheranschluss (18) mindestens zwei Anschlusskontaktanordnungen (33, 34) zum elektrischen Anschluss eines ersten Energiespeichers (16; 116) und mindestens eines zweiten Energiespeichers (17; 117) umfasst, wobei das Elektrogerät eine elektrische Schaltung (30; 130) zum Schalten der von den Energiespeichern (16, 17; 116, 117) an jeweiligen ersten und zweiten Anschlusskontakten (35-38) der Anschlusskontaktanordnungen (33, 34) bereitgestellten elektrischen Spannung in Serie aufweist, so dass eine Summe der über die Anschlusskontaktanordnungen (33, 34) eingespeisten Energiespeicher-Versorgungsspannungen (U1, U2) als eine Maschinen-Versorgungsspannung (UM) für den elektrischen Antriebsmotor (12) bereitsteht, wobei die Schaltung (30; 130) zur Deaktivierung mindestens einer der Anschlusskontaktanordnungen (33, 34) mindestens einen Verbindungsschalter (43, 44) zur elektrischen Verbindung von ersten und zweiten Einspeiseleitungen (39-42) aufweist, die mit den ersten und den zweiten Anschlusskontakten (35-38) der jeweiligen Anschlusskontaktanordnung (33, 34) verbunden sind und wobei die Schaltung (30; 130) zur Deaktivierung der Anschlusskontaktanordnung (33, 34) für eine Trennung des ersten oder zweiten Energiespeichers (16, 116, 17, 117) von dem Versorgungsnetz des Elektrogeräts mindestens einen Trennschalter (45, 46) zum Trennen einer elektrischen Verbindung zwischen der ersten Einspeiseleitung (39, 41) und dem ersten Anschlusskontakt (35, 37) und/oder zwischen der zweiten Einspeiseleitung (41, 42) und dem zweiten Anschlusskontakt (36, 38) aufweist,
**dadurch gekennzeichnet,**
**dass** es eine Steuerung (22) zur sequenziellen Ansteuerung des mindestens einen Trennschalters (45, 46) und des mindestens einen Verbindungsschalters (43, 44) aufweist, die bei einer Deaktivierung der Anschlusskontakte (35-38) der Anschlusskontaktanordnung (33, 34) zunächst den Trennschalter (45, 46) zur Trennung des ersten Anschlusskontakts (35, 37) von der ersten Einspeiseleitung (39, 41) und/oder des zweiten Anschlusskontakts (36, 38) von der zweiten Einspeiseleitung (41, 42) und anschließend den Verbindungsschalter (43, 44) zur elektrischen Verbindung der ersten und zweiten Einspeiseleitung (39-42) ansteuert, so dass die erste Einspeiseleitung (39, 41) und die zweite Einspeiseleitung (41, 42) des durch den Trennschalter (45, 46) deaktivierten ersten oder zweiten Energiespeichers (16, 116, 17, 117) überbrückt oder kurzgeschlossen sind,
und **dass** es mindestens eine Spannungserfassungseinrichtung (49, 50) zur Erfassung einer Spannung des jeweiligen Energiespeichers (16, 17; 116, 117) aufweist und dass es zur Deaktivierung einer jeweiligen Anschlusskontaktanordnung (33, 34) bei Unterschreiten eines dem jeweiligen Energiespeicher (16, 17; 116, 117) zugeordneten unteren Spannungsgrenzwertes und/oder bei Überschreiten eines dem jeweiligen Energiespeicher (16, 17; 116, 117) zugeordneten oberen Spannungsgrenzwertes ausgestaltet ist.

2. Elektrogerät nach Anspruch 1, **dadurch gekennzeichnet, dass** der mindestens eine Trennschalter (45, 46) und/oder der mindestens eine Verbindungsschalter (43, 44) elektronische Schalter sind.

3. Elektrogerät nach einem der Ansprüche 1 oder 2, **dadurch gekennzeichnet, dass** der mindestens eine Trennschalter (45, 46) und der mindestens eine Verbindungsschalter (43, 44) als insbesondere mechanische Wechselschalter ausgestaltet oder in einen Wechselschalter integriert sind.

4. Elektrogerät nach einem der vorhergehenden Ansprüche, **dadurch gekennzeichnet, dass** jede oder mindestens zwei Anschlusskontaktanordnungen (33, 34) der Hand-Werkzeugmaschine (10; 110) jeweils einen Verbindungsschalter (43, 44) zur elektrischen Überbrückung und Verbindung der den Anschlusskontakten (35-38) verbundenen Einspeiseleitungen (39-42) der Anschlusskontaktanordnungen (33, 34) und zweckmäßigerweise mindestens einen Trennschalter (45, 46) zum elektrischen Trennen mindestens eines Anschlusskontakts (35-38) von der jeweiligen Einspeiseleitung (39-42) aufweisen.

5. Elektrogerät nach einem der vorhergehenden Ansprüche, **dadurch gekennzeichnet, dass** es eine Stromversorgungseinrichtung (27) zur Bereitstellung mindestens eines stabilisierten Versorgungspotenzials und/oder unterschiedlicher Versorgungspotenziale aufweist.

6. Elektrogerät nach einem der vorhergehenden Ansprüche, **dadurch gekennzeichnet, dass** es eine Steuerung (22) und/oder eine Stromversorgungseinrichtung (27) aufweist, die mit den Anschlusskontakten (35-38) einer der Anschlusskontaktanordnungen (33, 34) verbunden ist, so dass der an die Anschlusskontaktanordnung (33, 34) angeschlossene jeweilige erste oder mindestens eine zweite Energiespeicher (16, 17; 116, 117) die Steuerung (22) oder die Stromversorgungseinrichtung (27) mit elektrischer Energie versorgt.

7. Elektrogerät nach einem der vorhergehenden Ansprüche, **dadurch gekennzeichnet, dass** dem elektrischen Antriebsmotor (12) eine Endstufe, insbesondere ein elektronischer Kommutator, zugeordnet ist, an die Maschinen-Versorgungsspannung (UM) angeschlossen ist.

8. Elektrogerät nach einem der vorhergehenden Ansprüche, **dadurch gekennzeichnet, dass** jeder Anschlusskontaktanordnung (33, 34) eine Spannungserfassungseinrichtung (49, 50) zugeordnet ist.

9. Elektrogerät nach einem der vorhergehenden Ansprüche, **dadurch gekennzeichnet, dass** mindestens einer Anschlusskontaktanordnung (33, 34) eine insbesondere über einen Datenbus kommunizierende Datenerfassungseinrichtung (52) zur Erfassung mindestens einer dem jeweiligen Energiespeicher (16, 17; 116, 117) zugeordneten Information, insbesondere Anzahl und/oder Art von Speicherzellen des Energiespeichers (16, 17; 116, 117) und/oder Temperatur des Energiespeichers und/oder Nennspannung des Energiespeichers und/oder Nennstrom des Energiespeichers und/oder eines Typs des Energiespeichers, zugeordnet ist.

10. Elektrogerät nach einem der vorhergehenden Ansprüche, **dadurch gekennzeichnet, dass** mindestens ein Verbindungsschalter (43, 44) zwischen den Einspeiseleitungen (39-42) mit einer Bypass-Diode (53), insbesondere einer in den Schalter integrierten Bodydiode, versehen ist derart, dass der Verbindungsschalter (43, 44) auch in seiner Offenstellung einen zur Versorgung einer Steuerung (22) des Elektrogeräts ausreichenden Strom leitet.

11. Elektrogerät nach einem der vorhergehenden Ansprüche, **dadurch gekennzeichnet, dass** es einen ersten Energiespeicher (116) aufweist, der mit den ersten und zweiten Anschlusskontaktanordnungen (33, 34) des Elektrogeräts verbindbare erste und zweite Ausgangskontakte (139, 140) aufweist, wobei die ersten Ausgangskontakte (139) mit mindestens einer Speicherzelle des ersten Energiespeichers (116) verbunden sind und die zweiten Ausgangskontakte (140) mit Eingangskontakten (142) des ersten Energiespeichers (116) verbunden sind, an die ein zweiter Energiespeicher (117) anschließbar ist, so dass dieser zweite Energiespeicher (117) über die zweite Anschlusskontaktanordnung (33, 34) (34, 134) des Elektrogeräts elektrische Energie einspeist.

12. Energiespeicher (216) zur Verwendung mit einem Elektrogerät in Gestalt einer Hand-Werkzeugmaschine (10; 110) oder eines Sauggeräts oder als Bestandteil eines derartigen Elektrogeräts, wobei das Elektrogerät einen elektrischen Antriebsmotor (12), ein Versorgungsnetz und einen Energiespeicheranschluss (18) für eine elektrische Energiespeicheranordnung zur Versorgung des Antriebsmotors (12) über das Versorgungsnetz aufweist, wobei der Energiespeicher-Ausgangskontakte (139, 140) zum Anschluss an erste und zweite Anschlusskontakte (35-38) des Energiespeicheranschlusses (18) des Elektrogeräts aufweist, wobei der Energiespeicher (216) einen ersten Energiespeicher bildet und Energiespeicher-Eingangskontakte zum Anschluss eines zweiten Energiespeichers (217) und eine elektrische Schaltung (30; 130) zum Schalten der von ihm selbst und dem zweiten Energiespeicher (217) bereitgestellten elektrischen Energiespeicher-Versorgungsspannung (U1, U2) in Serie aufweist, so dass eine Summe der Energiespeicher-Versorgungsspannungen (U1, U2) als eine Maschinen-Versorgungsspannung (UM) an den Energiespeicher-Ausgangskontakten (139, 140) zur Versorgung des elektrischen Antriebsmotors (12) bereitsteht, wobei die Schaltung (30; 130) zur Deaktivierung der Energiespeicher-Eingangskontakte mindestens einen Verbindungsschalter (43, 44) zur elektrischen Verbindung von mit Energiespeicher-Eingangskontakten verbundenen ersten und zweiten Einspeiseleitungen (39-42) aufweist, und wobei die Schaltung (30; 130) mindestens einen Trennschalter (45, 46) zum Trennen einer elektrischen Verbindung zwischen mindestens einem Energiespeicher-Eingangskontakt und der diesem zugeordneten Einspeiseleitung (39-42) für eine Trennung des ersten oder zweiten Energiespeichers (16, 116, 17, 117) von dem Versorgungsnetz des Elektrogeräts aufweist,
**dadurch gekennzeichnet,**
**dass** er eine Steuerung (22) zur sequenziellen Ansteuerung des mindestens einen Trennschalters (45, 46) und des mindestens einen Verbindungsschalters (43, 44) aufweist, die bei einer Deaktivierung der Energiespeicher-Eingangskontakte zunächst den Trennschalter (45, 46) zur Trennung eines ersten Energiespeicher-Eingangskontakts von der ersten Einspeiseleitung (39, 41) und/oder eines zweiten Energiespeicher-Eingangskontakts von der zweiten Einspeiseleitung (41, 42) und anschließend den Verbindungsschalter (43, 44) zur elektrischen Verbindung der ersten und zweiten Einspeiseleitung (39-42) ansteuert, so dass die erste Einspeiseleitung (39, 41) und die zweite Einspeiseleitung (41, 42) des durch den Trennschalter (45, 46) deaktivierten ersten oder zweiten Energiespeichers (16, 116, 17, 117) überbrückt oder kurzgeschlossen sind,
und **dass** er mindestens eine Spannungserfassungseinrichtung (49, 50) zur Erfassung einer Spannung des zweiten Energiespeichers (16, 17; 116, 117) aufweist und dass er zur Deaktivierung der Energiespeicher-Eingangskontakte bei Unterschreiten eines dem jeweiligen Energiespeicher (16, 17; 116, 117) zugeordneten unteren Spannungsgrenzwertes und/oder bei Überschreiten eines dem jeweiligen Energiespeicher (16, 17; 116, 117) zugeordneten oberen Spannungsgrenzwertes ausgestaltet ist.

## Claims

1. Electrical equipment in the form of a hand-operated power tool (10; 110) or a suction device, wherein the electrical equipment comprises an electric drive motor (12), a supply net and an energy store connection (18) for an electric energy storage arrangement for supplying the drive motor (12) via the supply net, wherein the energy store connection (18) comprises at least two connecting contact arrangements (33, 34) for the electric connection of a first energy store (16; 116) and at least one second energy store (17; 117), wherein the electrical equipment comprises an electric circuit (30; 130) for a series connection of the electric voltage provided by the energy stores (16,17; 116, 117) at the respective first and second connecting contacts (35 - 38) of the connecting contact arrangements (33, 34), so that a sum of the energy store supply voltages (U1, U2) fed in via the connecting contact arrangements (33, 34) is available as a machine supply voltage (UM) for the electric drive motor (12), wherein the circuit (30; 130) comprises, for the deactivation of at least one of the connecting contact arrangements (33, 34), at least one connecting switch (43, 44) for the electric connection of first and second feed lines (39 - 42) connected to the first and second connecting contacts (35 - 38) of the respective connecting contact arrangements (33, 34), and wherein the circuit (30; 130) comprises, for the deactivation of the connecting contact arrangement (33, 34) for a disconnection of the first or second energy store (16, 17; 116, 117) from the supply net of the electrical equipment, at least one circuit breaker (45, 46) for breaking an electric connection between the first feed line (39, 41) and the first connecting contact (35, 37) and/or between the second feed line (41, 42) and the second connecting contact (36, 38), **characterised in that**
it comprises a controller (22) for the sequential activation of the at least one circuit breaker (45, 46) and the at least one connecting switch (43, 44), which controller (22) activates, at a deactivation of the connecting contacts (35 - 38) of the connecting contact arrangement (33, 34), first the circuit breaker (45, 46) for disconnecting the first connecting contact (35, 37) from the first feed line (39, 41) and/or the second connecting contact (36, 38) from the second feed line (41, 42), and then the connecting switch (43, 44) for the electric connection of the first and second feed line (39 - 42), so that the first feed line (39, 41) and the second feed line (41, 42) of the first or second energy store (16, 116; 17, 117) deactivated by the circuit breaker (45, 46) are bridged or short-circuited,
and **in that** it comprises at least one voltage detection device (49, 50) for detecting a voltage of the respective energy store (16, 116; 17, 117), and **in that** it is designed to deactivate a respective connecting contact arrangement (33, 34) if a lower voltage limit value assigned to the respective energy store (16, 116; 17, 117) is undershot and/or if an upper voltage limit value assigned to the respective energy store (16, 116; 17, 117) is exceeded.

2. Electrical equipment according to claim 1, **characterised in that** the at least one circuit breaker (45, 46) and/or the at least one connecting switch (43, 44) is/are electronic switches.

3. Electrical equipment according to claim 1 or 2, **characterised in that** the at least one circuit breaker (45, 46) and the at least one connecting switch (43, 44) are designed as in particular mechanical changeover switches or integrated into a changeover switch.

4. Electrical equipment according to any of the preceding claims, **characterised in that** each or at least two of the connecting contact arrangements (33, 34) of the hand-operated power tool (10; 110) comprise(s) a connecting switch (43, 44) each for electrically bridging and connecting the feed lines (39 - 42) of the connecting contact arrangements (33, 34), which are connected to the connecting contacts (35 - 38), and expediently at least one circuit breaker (45, 46) for electrically disconnecting at least connecting contact (35 - 38) from the respective feed line (39 - 42).

5. Electrical equipment according to any of the preceding claims, **characterised in that** it comprises a power supply device (27) for providing at least one stabilised supply potential and/or different supply potentials.

6. Electrical equipment according to any of the preceding claims, **characterised in that** it comprises a controller (22) and/or a power supply device (27) connected to the connecting contacts (35 - 38) of one of the connecting contact arrangements (33, 34), so that the first or the at least one second energy store (16, 17; 116, 117) connected to the connecting contact arrangement (33, 34) supplies the controller (22) or the power supply device (27) with electric energy.

7. Electrical equipment according to any of the preceding claims, **characterised in that** an output stage, in particular an electronic commutator, to which the machine supply voltage (UM) is connected, is assigned to the electric drive motor (12).

8. Electrical equipment according to any of the preceding claims, **characterised in that** a voltage detection device (49, 50) is assigned to each connecting contact arrangement (33, 34).

9. Electrical equipment according to any of the preceding claims, **characterised in that** at least one connecting contact arrangement (33, 34) is assigned a data acquisition device (52), which communicates via a data bus in particular, for the acquisition of at least one information associated with the respective energy store (16, 17; 116, 117), in particular of the number and/or type of storage cells of the energy store (16, 17; 116, 117) and/or the temperature of the energy store and/or the rated voltage of the energy store and/or the rated current of the energy store and/or a type of the energy store.

10. Electrical equipment according to any of the preceding claims, **characterised in that** at least one connecting switch (43, 44) between the feed lines (39 - 42) is provided with a bypass diode (53), in particular with a body diode integrated into the switch, in such a way that the connecting switch (43, 44) conducts a current sufficient for supplying a controller (22) of the electrical equipment even in its open position.

11. Electrical equipment according to any of the preceding claims, **characterised in that** it comprises a first energy store (116) having output contacts (139, 140) connectable to the first and second connecting contact arrangements (33, 34) of the electrical equipment, wherein the first output contacts (139) are connected to at least one storage cell of the first energy store (116) and the second output contacts (140) are connected to input contacts (142) of the first energy store (116), to which input contacts (142) a second energy store (117) can be connected, so that this second energy store (117) feeds in electric energy via the second connecting contact arrangement (33, 34) (34, 134) of the electrical equipment.

12. Energy store (216) for use with electrical equipment in the form of a hand-operated power tool (10; 110) or a suction device or as a part of such electrical equipment, wherein the electrical equipment comprises an electric drive motor (12), a supply net and an energy store connection (18) for an electric energy storage arrangement for supplying the drive motor (12) via the supply net, wherein the energy store comprises output contacts (139, 140) for connection to first and second connecting contacts (35 - 38) of the energy store connection (18) of the electrical equipment, wherein the energy store (216) forms a first energy store and has energy store input contacts for the connection of a second energy store (217) and an electric circuit (30; 130) for a series connection of an electric energy store supply voltage (U1, U2) provided by itself and the second energy store (217), so that a sum of the energy store supply voltages (U1, U2) is available as a machine supply voltage (UM) at the energy store output contacts (139, 140) for supplying the electric drive motor (12), wherein the circuit (30; 130) comprises, for the deactivation of the energy store input contacts, at least one connecting switch (43, 44) for the electric connection of first and second feed lines (39 - 42) connected to energy store input contacts, and wherein the circuit (30; 130) comprises at least one circuit breaker (45, 46) for breaking an electric connection between at least one energy store input contact and the associated feed line (39 - 42) for a disconnection of the first or second energy store (16, 116, 17, 117) from the supply net of the electrical equipment, **characterised in that**
it comprises a controller (22) for the sequential activation of the at least one circuit breaker (45, 46) and the at least one connecting switch (43, 44), which controller (22) activates, at a deactivation of the energy store input contacts, first the circuit breaker (45, 46) for disconnecting a first energy store input contact from the first feed line (39, 41) and/or a second energy store input contact from the second feed line (41, 42), and then the connecting switch (43, 44) for the electric connection of the first and second feed line (39 - 42), so that the first feed line (39, 41) and the second feed line (41, 42) of the first or second energy store (16, 116; 17, 117) deactivated by the circuit breaker (45, 46) are bridged or short-circuited,
and **in that** it comprises at least one voltage detection device (49, 50) for detecting a voltage of the second energy store (16, 116; 17, 117), and **in that** it is designed to deactivate the energy store input contacts if a lower voltage limit value assigned to the respective energy store (16, 116; 17, 117) is undershot and/or if an upper voltage limit value assigned to the respective energy store (16, 116; 17, 117) is exceeded.

## Revendications

1. Appareil électrique sous la forme d'une machine-outil à main (10 ; 110) ou d'un appareil d'aspiration, dans lequel l'appareil électrique présente un moteur d'entraînement (12) électrique, un réseau d'alimentation et un raccord d'accumulateur d'énergie (18) pour un agencement d'accumulateur d'énergie électrique destiné à l'alimentation du moteur d'entraînement (12) par le réseau d'alimentation, dans lequel le raccord d'accumulateur d'énergie (18) comporte au moins deux agencements de contact de raccord (33, 34) pour le raccord électrique d'un premier accumulateur d'énergie (16; 116) et au moins d'un second accumulateur d'énergie (17; 117), dans lequel l'appareil électrique présente un circuit électrique (30 ; 130) pour la mise en série de la tension électrique mise à disposition par les accumulateurs d'énergie (16, 17 ; 116, 117) sur des premier et second contacts de raccord (35-38) respectifs des agencements de contact de raccord (33, 34) de sorte qu'une somme des tensions d'alimentation d'accumulateur d'énergie (U1, U2) fournies par les agencements de contact de raccord (33, 34) soit à disposition, comme tension d'alimentation de machine (UM), du moteur d'entraînement électrique (12), dans lequel le circuit (30 ; 130) présente pour la désactivation d'au moins un des agencements de contact de raccord (33, 34) au moins un commutateur de liaison (43, 44) pour la liaison électrique des premier et second conduits d'injection (39-42) qui sont reliés aux premier et second contacts de raccord (35-38) de l'agencement de contact de raccord respectif (33, 34) et dans lequel le circuit (30 ; 130) présente pour la désactivation de l'agencement de contact de raccord (33, 34) pour une séparation du premier ou second accumulateur d'énergie (16, 116, 17, 117), du réseau d'alimentation de l'appareil électrique, au moins un disjoncteur (45, 46) pour la séparation d'une liaison électrique entre la première conduite d'alimentation (39, 41) et le premier contact de raccord (35, 37) et/ou entre la seconde conduite d'alimentation (41, 42) et le second contact de raccord (36, 38),
**caractérisé en ce que**
il présente une commande (22) pour la commande séquentielle de l'au moins un disjoncteur (45, 46) et de l'au moins un commutateur de liaison (43, 44), qui commande lors d'une désactivation des contacts de raccord (35-38) de l'agencement de contact de raccord (33, 34) tout d'abord le disjoncteur (45, 46) pour la séparation du premier contact de raccord (35, 37), de la première conduite d'alimentation (39, 41) et/ou du second contact de raccord (36, 38), de la seconde conduite d'alimentation (41, 42) et ensuite le commutateur de liaison (43, 44) pour la liaison électrique de la première et seconde conduite d'alimentation (39-42) de sorte que la première conduite d'alimentation (39, 41) et la seconde conduite d'alimentation (41, 42) du premier ou second accumulateur d'énergie (16, 116, 17, 117) désactivé par le disjoncteur (45, 46) soient pontées ou court-circuitées,
et il présente au moins un dispositif de détection de tension (49, 50) pour la détection d'une tension de l'accumulateur d'énergie (16, 17 ; 116, 117) et **en ce qu'**il est configuré pour la désactivation d'un agencement de contact de raccord (33, 34) lors de la non-atteinte d'une valeur limite de tension inférieure associée à l'accumulateur d'énergie (16, 17 ; 116, 117) et/ou lors du dépassement d'une valeur limite de tension supérieure associée à l'accumulateur d'énergie (16, 17 ; 116, 117).

2. Appareil électrique selon la revendication 1, **caractérisé en ce que** l'au moins un disjoncteur (45, 46) et/ou l'au moins un commutateur de liaison (43, 44) sont des commutateurs électroniques.

3. Appareil électrique selon l'une quelconque des revendications 1 ou 2, **caractérisé en ce que** l'au moins un disjoncteur (45, 46) et l'au moins un commutateur de liaison (43, 44) sont configurés comme des onduleurs en particulier mécaniques ou sont intégrés dans un onduleur.

4. Appareil électrique selon l'une quelconque des revendications précédentes, **caractérisé en ce que** chacun ou au moins deux agencements de contact de raccord (33, 34) de la machine-outil à main (10 ; 110) présentent un commutateur de liaison (43, 44) pour le pontage et la liaison électriques des conduites d'alimentation (39-42) reliées aux contacts de raccord (35-38) des agencements de contact de raccord (33, 34) et de manière appropriée au moins un disjoncteur (45, 46) pour la séparation électrique d'au moins d'un contact de raccord (35-38), de ladite conduite d'alimentation (39-42).

5. Appareil électrique selon l'une quelconque des revendications précédentes, **caractérisé en ce qu'**il présente un dispositif d'alimentation en courant (27) pour la mise en disposition d'au moins un potentiel d'alimentation stabilisé et/ou de différents potentiels d'alimentation.

6. Appareil électrique selon l'une quelconque des revendications précédentes, **caractérisé en ce qu'**il présente une commande (22) et/ou un dispositif d'alimentation en courant (27) qui est relié aux contacts de raccord (35-38) d'un des agencements de contact de raccord (33, 34) de sorte que le premier ou au moins un second accumulateur d'énergie (16, 17 ; 116, 117) raccordé à l'agencement de contact de raccord (33, 34) alimente la commande (22) ou le dispositif d'alimentation en courant (27) avec de l'énergie électrique.

7. Appareil électrique selon l'une quelconque des revendications précédentes, **caractérisé en ce qu'**un étage final, en particulier un commutateur électronique, est associé au moteur d'entraînement électrique (12), auquel étage final est raccordée la tension d'alimentation de machine (UM).

8. Appareil électrique selon l'une quelconque des revendications précédentes, **caractérisé en ce qu'**un dispositif de détection de tension (49, 50) est associé à chaque agencement de contact de raccord (33, 34).

9. Appareil électrique selon l'une quelconque des revendications précédentes, **caractérisé en ce qu'**un dispositif de détection de données (52) communiquant en particulier par un bus de données pour la détection d'au moins une information associée à l'accumulateur d'énergie (16, 17 ; 116, 117), en particulier le nombre et/ou le type de cellules d'accumulateur de l'accumulateur d'énergie (16, 17; 116, 117) et/ou la température de l'accumulateur d'énergie et/ou la tension nominale de l'accumulateur d'énergie et/ou le courant nominal de l'accumulateur d'énergie et/ou d'un type de l'accumulateur d'énergie, est associé à au moins un agencement de contact de raccord (33, 34).

10. Appareil électrique selon l'une quelconque des revendications précédentes, **caractérisé en ce qu'**au moins un commutateur de liaison (43, 44) est pourvu entre les conduites d'alimentation (39-42) d'une diode de dérivation (53), en particulier d'une diode de corps intégrée dans le commutateur de telle manière que le commutateur de liaison (43, 44) conduise aussi dans sa position ouverte un courant suffisant à l'alimentation d'une commande (22) de l'appareil électrique.

11. Appareil électrique selon l'une quelconque des revendications précédentes, **caractérisé en ce qu'**il présente un premier accumulateur d'énergie (116) qui présente des premier et second contacts de sortie (139, 140) reliables aux premier et second agencements de contact de raccord (33, 34) de l'appareil électrique, dans lequel les premiers contacts de sortie (139) sont reliés à au moins une cellule d'accumulateur du premier accumulateur d'énergie (116) et les seconds contacts de sortie (140) sont reliés aux contacts d'entrée (142) du premier accumulateur d'énergie (116), auxquels un second accumulateur d'énergie (117) peut être raccordé de sorte que ce second accumulateur d'énergie (117) injecte de l'énergie électrique par le second agencement de contact de raccord (33, 34) (34, 134) de l'appareil électrique.

12. Accumulateur d'énergie (216) pour l'utilisation avec un appareil électrique sous la forme d'une machine-outil à main (10 ; 110) ou d'un appareil d'aspiration ou comme constituant d'un tel appareil électrique, dans lequel l'appareil électrique présente un moteur d'entraînement électrique (12), un réseau d'alimentation et un raccord d'accumulateur d'énergie (18) pour un agencement d'accumulateur d'énergie électrique destiné à l'alimentation du moteur d'entraînement (12) par le réseau d'alimentation, dans lequel les contacts de sortie d'accumulateur d'énergie (139, 140) présentent pour le raccordement aux premier et second contacts de raccord (35-38) du raccord d'accumulateur d'énergie (18) de l'appareil électrique, dans lequel l'accumulateur d'énergie (216) forme un premier accumulateur d'énergie et présente des contacts d'entrée d'accumulateur d'énergie pour le raccordement d'un second accumulateur d'énergie (217) et un circuit électrique (30 ; 130) pour la mise en série de la tension d'alimentation d'accumulateur d'énergie électrique (U1, U2) mise à disposition par lui-même et le second accumulateur d'énergie (217) de sorte qu'une somme des tensions d'alimentation d'accumulateur d'énergie (U1, U2) soit mise à disposition comme tension d'alimentation de machine (UM) sur les contacts de sortie d'accumulateur d'énergie (139, 140) pour l'alimentation du moteur d'entraînement électrique (12), dans lequel le circuit (30 ; 130) présente pour la désactivation des contacts d'entrée d'accumulateur d'énergie au moins un commutateur de liaison (43, 44) pour la liaison électrique des première et seconde conduites d'alimentation (39-42) reliées aux contacts d'entrée d'accumulateur d'énergie (39-42), et dans lequel le circuit (30 ; 130) présente au moins un disjoncteur (45, 46) pour la séparation d'une liaison électrique entre au moins un contact d'entrée d'accumulateur d'énergie et la conduite d'alimentation (39-42) qui lui est associée pour une séparation du premier ou second accumulateur d'énergie (16, 116, 17, 117), du réseau d'alimentation de l'appareil électrique,
**caractérisé en ce que**
il présente une commande (22) pour la commande séquentielle d'au moins un disjoncteur (45, 46) et de l'au moins un commutateur de liaison (43, 44) qui commande lors d'une désactivation des contacts d'entrée d'accumulateur d'énergie tout d'abord le disjoncteur (45, 46) pour la séparation d'un premier contact d'entrée d'accumulateur d'énergie, de la première conduite d'alimentation (39, 41) et/ou d'un second contact d'entrée d'accumulateur d'énergie, de la seconde conduite d'alimentation (41, 42) et ensuite le commutateur de liaison (43, 44) pour la liaison électrique des première et seconde conduites d'alimentation (39-42) de sorte que la première conduite d'alimentation (39, 41) et la seconde conduite d'alimentation (41, 42) du premier ou second accumulateur d'énergie (16, 116, 17, 117) désactivé par le disjoncteur (45, 46) soient pontées ou court-circuitées,
et il présente au moins un dispositif de détection de tension (49, 50) pour la détection d'une tension du second accumulateur d'énergie (16, 17 ; 116, 117) et **en ce qu'**il est configuré pour la désactivation des contacts d'entrée d'accumulateur d'énergie lors de la non-atteinte d'une valeur limite de tension inférieure associée à l'accumulateur d'énergie respective (16, 17; 116, 117) et/ou lors du dépassement d'une valeur limite de tension supérieure associée à l'accumulateur d'énergie respectif (16, 17 ; 116, 117).
